**Europäisches Patentamt**

**European Patent Office**

**Office européen des brevets**

(11) Veröffentlichungsnummer: **0 353 387 A2**

## (12) EUROPÄISCHE PATENTANMELDUNG

(21) Anmeldenummer: **89106338.0**

(22) Anmeldetag: **10.04.89**

(51) Int. Cl.⁴: **B65D 88/12**

(30) Priorität: **01.08.88 DE 8809803 U**

(43) Veröffentlichungstag der Anmeldung:
**07.02.90 Patentblatt 90/06**

(84) Benannte Vertragsstaaten:
**AT BE CH DE ES FR GB IT LI LU NL SE**

(71) Anmelder: **Karl Kässbohrer Fahrzeugwerke GmbH**
**Kässbohrerstrasse 13 Postfach 2660**
**D-7900 Ulm (Donau)(DE)**

(72) Erfinder: **Pfeiffer, Franz**
**13 Uhlandstrasse**
**D-7905 Dietenheim 2(DE)**

(74) Vertreter: **Patentanwälte Grünecker, Kinkeldey, Stockmair & Partner**
**Maximilianstrasse 58**
**D-8000 München 22(DE)**

(54) **Druckbehälter.**

(57) Der Druckbehälter verfügt über zwei Seitenwände, eine Deck- und eine Bodenwand sowie Stirnende. Alle Wände sind zum Behälterinneren konkav gekrümmt.

Der Behälter soll einen in Quaderform zur Verfügung stehenden Transportraum möglichst gut ausnutzen. Hierfür weisen die Seiten-, Deck und Bodenwände an ihren miteinander verbindenden Eckbereichen einen kleineren Krümmungsradius auf als in ihren jeweiligen Wandmitten. Weiterhin ist der Druckbehälter mit einem quaderförmigen Traggerüst versehen, dessen Ecken im wesentlichen auf den gleichen Querschnittsdiagonalen liegen wie die Eckbereiche der Wände. Biegesteife Wandelemente stellen eine Verbindung zwischen dem Traggerüst und den Behälterwänden her.

FIG.1

EP 0 353 387 A2

# Druckbehälter

Die Erfindung bezieht sich auf einen Druckbehälter für Über- oder Unterdruck mit Seitenwänden, Stirnwänden, einer Deckwand und einer Bodenwand, wobei alle Wände zum Behälterinnenraum konkav gekrümmt ausgebildet sind.

Solche Druckbehälter sind aus der Praxis bekannt. Es handelt sich hierbei zumeist um Druckbehälter in Kugelform oder in Zylinderform mit bombierten Stirnwänden. Diese Formen eignen sich für Druckbehälter deshalb recht gut, da so geformte Behälter verhältnismäßig hohe Drücke aushalten können. Andererseits weisen diese Formen auch gewisse Nachteile auf, da solche Behälter z.B. auf einem Lastzug nur einen Bruchteil des zur Verfügung stehenden Transportraumes ausnutzen können. Außerdem lassen sich solche Druckbehälter nicht stapeln, wenn sie z.B. auf Schiffe oder Eisenbahnen verladen werden sollen. Um die Stapelbarkeit solcher Druckbehälter zu erreichen, wurde bereits vorgeschlagen, um die Druckbehälter herum ein quaderförmiges Gerüst zu bauen. Da der Druckbehälter jedoch nur einen kleinen Teil des von dem Traggerüst beanspruchten Raumes ausfüllt, bleibt ein Großteil des Transportraumes ungenutzt.

Aufgabe der vorliegenden Erfindung ist es daher, einen Druckbehälter der eingangs genannten Art zu schaffen, der einen in Quaderform zur Verfügung stehenden Transportraum möglichst gut ausnutzt.

Diese Aufgabe wird erfindungsgemäß dadurch gelöst, daß die Seitenwände, die Deckwand und die Bodenwand an ihren die Wände miteinander verbindenden Eckbereichen einen kleineren Krümmungsradius aufweisen als in ihrer jeweiligen Wandmitte zwischen zwei benachbarten Eckbereichen, daß außen um die Wände ein im wesentlichen quaderförmiges Traggerüst angebracht ist, dessen Ecken im wesentlichen auf den gleichen Querschnittsdiagonalen liegen wie die Eckbereiche der Wände, und daß biegesteife Wandelemente als Verbindung zwischen Traggerüst und Behälterwänden vorhanden ist.

Diese Lösung hat den Vorteil, daß der Innenraum des Behälters der Quaderform stark angenähert werden kann, ohne daß seine Druckbeanspruchbarkeit darunter leidet. Das quaderförmige Traggerüst kann von den Außenmaßen her identisch mit dem zur Verfügung stehenden Transportraum sein. Die einen sehr großen Krümmungsradius aufweisenden Wände können sich bis an die Quaderseiten des Traggerüstes tangential anschmiegen und bis weit in die Ecken des Traggerüstes reichen. Der kleine Krümmungsradius in den Eckbereichen kann im Extremfall gegen Null gehen, wenn z.B. die um einen großen Krümmungsradius gebogenen Wände in den Ecken im Querstoß miteinander verschweißt sind. Aufgrund der ungleich großen Krümmungsradien ist der Behälter bei Innendruck bestrebt, im Querschnitt eine Kreisform anzunehmen, was bedeutet, daß die Eckbereiche des Behälters angestrebt sind, sich zum Behälterinneren zu bewegen. Hieran werden sie durch die biegesteifen Wandelemente gehindert. Es entsteht somit ein Fachwerk, das auf das Traggerüst Biegekräfte überträgt, die dort aufgefangen werden.

Durch zusätzliches Abknicken der Behälterwände zur Behältermitte zu, wird zum Traggerüst ein Abstand erreicht, der vorteilhaft ist im Hinblick auf das erreichbare Trägheitsmoment. Durch eine Verbindung vom Traggerüst zu den Behälterwänden die durch Kanten, Prägen der Bleche des Traggerüsts oder durch eine Schweißkonstruktion hergestellt sein kann, werden zusätzlich Biegespannungen aufgenommen.

Aufgrund dieser Konstruktion ist es möglich, den zur Verfügung stehenden Transportraumin einem wesentlich höheren Maße auszunutzen, als dies mit kugelförmigen oder zylinderförmigen Druckbehältern möglich wäre.

Zusätzlich zu den biegesteifen Elementen besteht bei einer Weiterbildung der Erfindung die Möglichkeit, daß die Eckbereiche der Wände über Zuganker mit der jeweils zugehörigen Ecke des Traggerüsts verbunden sind. Diese Zuganker ergänzen sich ideal mit den biegesteifen Wandelementen. Während letztere im Bereich der Wandmitte angeordnet sind und dort die Biegekräfte aufnehmen, sind die Zuganker in den Eckenbereichen gegeben und stellen dort eine Eckverbindung zwischen den Wänden des Druckbehälters einerseits und zwischen dem Druckbehälter und dem Traggerüst andererseits her. Die Zuganker übertragen die vom Druckbehälter ausgehenden Zugkräfte in das Fachwerk.

Wenn die Druckbehälter als Container verladen werden sollen, ist es günstig, wenn die Wandelemente als im wesentlichen ebenenen, eventuell gekanteten oder geprägten Blechtafeln gebildet sind, die tangential an den Außenseiten der Wände des Druckbehälters oder durch zusätzliches Knikken der Behälterwände auch mit Abstand zu den Außenseiten anliegen und an ihren Ecken miteinander verbunden sind.Auf diese Weise bildet das Traggerüst zugleich das Containergehäuse und kann auch zum Aufeinanderstapeln der Druckbehälter herangezogen werden.

Für die Aufnahme des Drucks aber auch zur Versteifung des Druckbehälters insgesamt ist es günstig, wenn wenigstens eine Wand einen in Richtung der Längserstreckung verlaufenden, nach innen gerichteten Knick aufweist. Dieser Knick dient selbst als Versteifung, er ermöglicht es aber auch im Bereich der Wandmitte, wo der Druckbehälter einen großen Krümmungsradius aufweist, an der Außenseite Zug- und/oder Druckelemente anzubringen, die den Innenknick überspannen und nach außen hin nicht auftragen. Die Zugelemente können mannigfach gestaltet sein, nämlich in Form von Sickenelementen, Blechtafeln, Rippen, Seilen, Stangen usw.

Gemäß einer bevorzugten Ausführungsform sind die Zuganker als im Querschnitt im wesentlichen I-förmige, sich längs des Behälters erstreckende Profile mit einem oberen und einem unteren Flansch und einem beide Flansche miteinander verbindenden Verbindungssteg ausgebildet, wobei die Verbindungsstege jeweils etwa auf einer Querschnittsdiagonalen des Traggerüsts liegen und der untere Flansch mit jeweils zwei benachbarten Wänden des Behälters verbunden ist, während der obere Flansch mit jeweils zwei benachbarten Blechtafeln oder Formteilen des Traggerüsts verbunden ist.

Günstig ist es in diesem Zusammenhang, wenn der untere Flansch des I-Profils eine zum Behälterinneren konkave C-Form aufweist und tangential im Bereich des größeren Krümmungsradius an die Wände des Behälters anschließt, wobei die Eckbereiche des Behälters durch den C-förmigen Flansch gebildet sind, da die Behälterwände auf diese Weise auf einfachen Blechtafeln gebildet werden können, die einfach an die Kanten des C-förmigen Flansches angeschweißt werden.

Gemäß einer anderen Variante können die Seitenwände, die Deckwand und die Bodenwand des Behälters einen geschlossenen Behältermantel bilden, wobei die Blechtafeln des Traggerüstes an dessen Ecken trapezförmig abgekantet sind, wobei die abgekanteten Teile der Blechtafeln die Zuganker bilden. Bei dieser Ausbildung des Druckbehälters sind nur sehr wenige Schweißnähte vonnöten, was dessen Drucksicherheit erhöht.

Es ist günstig, wenn mindestens drei Seiten des Behälters von abgekanteten Blechtafeln umgeben sind, wobei die benachbarten Blechtafeln an ihren abgekanteten Teilen miteinander verbunden sind. Somit können die Zuganker die doppelte Blechstärke aufweisen.

Wenn die Deckwand des Behälters von Stützträgern überspannt ist, die beidendig an den Ecken der angrenzenden Blechtafeln des Traggerüstes befestigt sind, sind die an der Deckwand angeordneten Einfülldome des Druckbehälters frei zugänglich, wodurch die Handhabung des Druckbehälters beim Befüllen sehr einfach ist.

Es ist vorteilhaft, wenn die Blechtafeln mit den Außenseiten der Wände des Behälters verbunden sind. Hierdurch wird zum einen eine Aussteifung der Blechtafeln erzielt, zum anderen verhindern die Blechtafeln eine Verformung des Druckbehälters dann, wenn sich im Inneren des Behälters ein Unterdruck ausbildet, wie es z.B. nach einer Heißdampfreinigung der Fall sein kann. Zu diesem Zweck kann es günstig sein, die Blechtafeln durch Sicken auszusteifen.

Im folgenden werden Ausführungsbeispiele der Erfindung anhand einer Zeichnung näher erläutert. Es zeigen:

Fig.1 eine Seitenansicht einer ersten Ausführungsform eines erfindungsgemäßen Druckbehälters,

Fig.2 einen Querschnitt durch den Druckbehälter entlang der Linie II-II aus Fig.1,

Fig.3 eine Detailansicht III aus Fig.2,

Fig.4 in einer ähnlichen Ansicht wie Fig.3 eine Variante der Ausgestaltung des Eckbereiches eines Druckbehälters,

Fig.5 eine Seitenansicht einer zweiten, als Container ausgebildeten Ausführungsform der Erfindung,

Fig.6 eine Draufsicht auf eine weitere, als Fahrzeugdruckbehälter ausgebildete Ausführungsform, und

Fig.7 einen Vertikalschnitt durch den Druckbehälter von Fig.6.

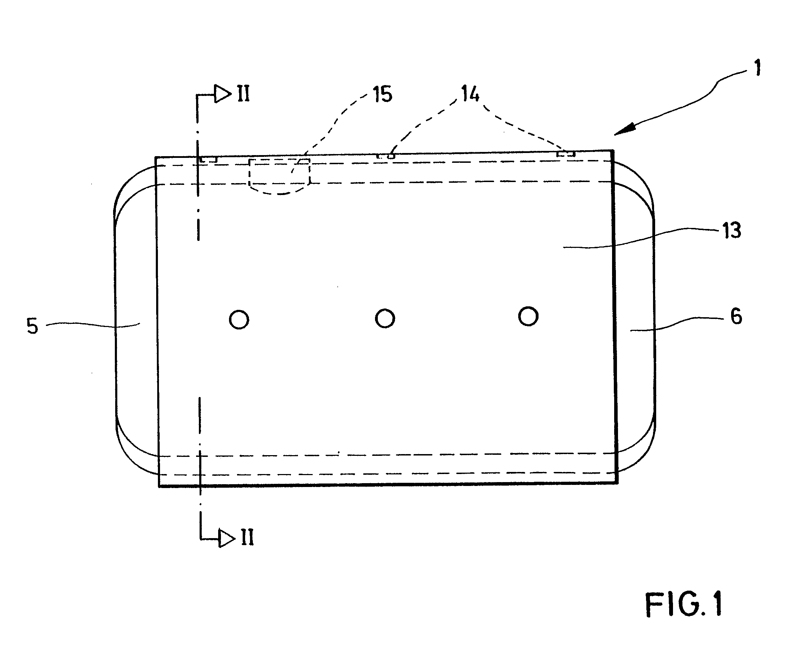

In der Fig.1 bis 4 ist ein Druckbehälter 1 dargestellt, dessen Innnraum 2 von Behälterwänden 3 bis 8 umschlossen ist. Es handelt sich hier um zwei einander gegenüberliegende Seitenwände 3 und 4, zwei sich ebenfalls gegenüberliegende Stirnwände 5 und 6, eine Deckwand 7 und eine Bodenwand 8. Die Stirnwände 5 und 6 sind ähnlich wie bei herkömmlichen Druckbehältern auch als Klöpperboden ausgbildet. Alle Behälterwände 3 bis 8 sind zum Behälterinnenraum 2 konkav gekrümmt ausgebildet. Die den Behältermantel bildenden Behälterwände 3 und 4 sowie 7 und 8 bilden im Querschnitt nahezu ein Rechteck aus, wobei der Eckbereich 9 des Behältermantels einen wesentlich kleineren Krümmungsradius r aufweisen als die Wände 3,4,7 und 8 in ihrer Wandmitte. Der große Krümmungsradius R ist bei dem hier gezeigten Ausführungsbeispiel fünfzehnmal so groß wie der kleine Krümmungsradius r. Es sind jedoch weit größere Radienunterschiede denkbar; im Extremfall kann r = 0 sein.

Außen um die Wände 3,4,7 und 8 ist ein quaderförmiges Traggerüst 10 angebracht, dessen Ecken 11 im wesentlichen auf den gleichen Querschnittsdiagonalen D liegen wie die Eckbereiche 9 der Wände 3,4,7 und 8. Im Gegensatz zu den Eckbereichen 9 der Behälterwände 3,4, 7 und 8 weisen die Ecken des Traggerüstes praktisch keinen Radius auf, so daß die Eckbereiche 9 von den Ecken 11 beabstandet sind. Die Eckbereiche 9 der Wände 3,4,7 und 8 sind über Zuganker 12 mit den jeweils zugehörigen Ecken 11 des Traggerüstes 10 verbunden.

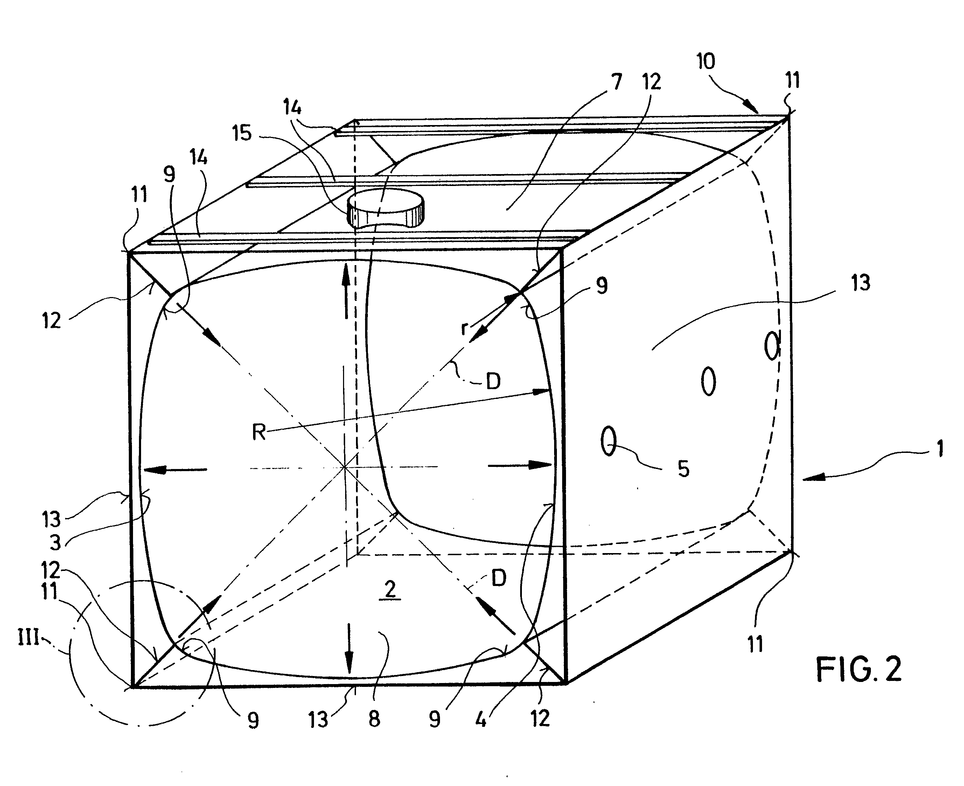

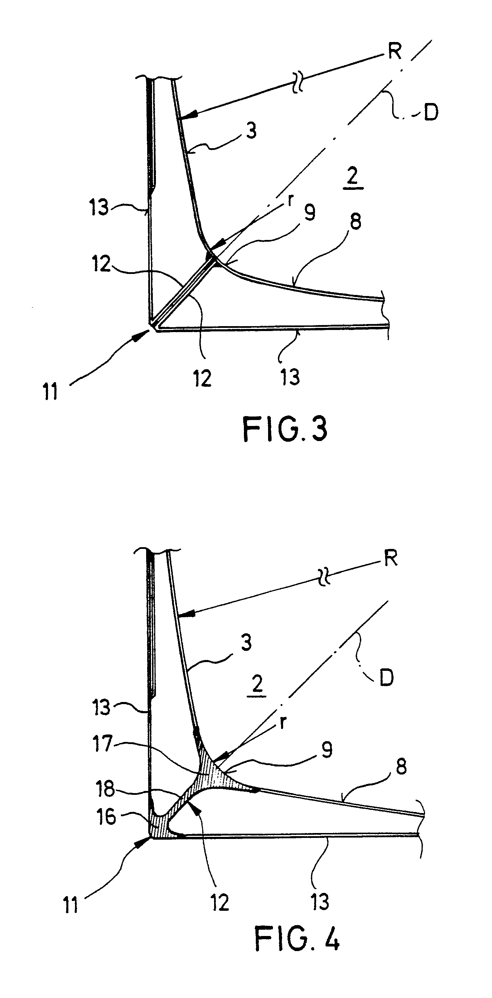

Wie besonders gut aus Fig.2 ersichtlich ist, ist das Traggerüst 10 im wesentlichen aus profilierten Wandelementen 13 gbildet, die tangential an den Außenseiten der Wände 3, 4, 7 und 8 anliegen und an ihren Ecken 11 miteinander verbunden sind. Bei der in den Figuren 2 und 3 gezeigten Ausführungsform sind die Wandelemente als Blechtafeln 13 gebildet, die im Bereich derEcken 11 des Traggerüstes 10 abgekantet sind, so daß die abgekanteten Teile zusammmen mit dem zugehörigen Blech 13 im Querschnitt trapezförmig aussehen, wobei die abgekanteten Teile die Zuganker 12 bilden. Es ist zu erkennen, daß die abgekanteten Teile 12 jeweils auf der zugehörigen Querschnittsdiagonalen D liegen. Die Zuganker 12 sind jeweils auf die Außenseite der Eckbereiche 9 des Behältermantels angeschweißt. Es sind als Wandelemente 13 insgesamt drei Blechtafeln vorgesehen, die die beiden Seitenwände 3 und 4 sowie den Boden 8 abdecken. Jeweils in Wandmitte sind die Blechtafeln mit der Außenseite der Seitenwände 3 und 4 verscheißt. Wie nicht dargestellt ist, können die Blechtafeln zur Versteifung vertikal verlaufende Sicken aufweisen.

Wie besser aus Fig.3 ersichtlich ist, sind die Blechtafeln im Bereich der abgekanteten Teile 12 miteinander verschweißt, so daß zwei Teile parallel zueinander verlaufen und mit den Eckbereichen 9 verschweißt sind.

Die Deckwand 7 des Druckbehälters 1 wird von Stützträgern 14 überspannt, die an den Ecken 11 der sich gegenüberliegenden und die Seitenwände 3 und 4 abdeckenden Blechtafeln 13 angeschweißt sind. Hierdurch bleibt der in der Deckwand vorgesehene Einfülldom 15 frei zugänglich.

Es ist nicht unbedingt notwendig, daß jede Blechtafel 13 jeweils zwei Zuganker 13 aufweist. Es wäre bei dem in Fig.2 gezeigten Ausführungsbeispiel auch denkbar, daß die den Boden 8 abdekkende Blechtafel 13 zwei abgekantete Teile 12 aufweist, während die beiden Blechtafeln 13, die die Seitenwände 3 und 4 abdecken, nur an ihrer oberen Kante einen Zuganker 12 aufweisen. Die seitlichen Blechtafeln würden dann mi der den Boden 8 abdeckenden Blechtafel lediglich entlang der äußeren Ecke verschweißt werden.

In Fig.4 ist eine weitere Variante der Ausgestaltung der Eckbereiche 9 und der Ecken 11 des Druckbehälters 1 dargestellt. Die Zuganker 12 sind hier als stranggepreßtes Profil ausgebildet, das im wesentlichen eine I-Form aufweist. Das Profil weist einen oberen Flansch 16, einen unteren Flansch 17 und einen beide Flansche miteinander verbindenden Verbindungssteg 18 auf. Der untere Flansch ist als zum Innenraum 2 des Druckbehälters 1 konkaver C-förmiger Schweißflansch ausgebildet, an dessen Kanten die Wände 3,4,7 und 8 angeschweißt sind. Der C-förmige Flansch bildet somit den Eckbereich 9. Die Schweißverbindung zwischen den Wänden 3,4,7 und 8 und dem C-förmigen Flansch 17 erfolgt erst im Bereich des größeren Krümmungsradius R der Wände 3,4,7 und 8, also außerhalb der Biegezone.

Der obere Flansch 16 des Zugankers 12 ist V-förmig ausgebildet, wobei die beiden Schenkel der V-Form mit den Blechtafeln 13 fluchten. An den freien Kanten der Schenkel der V-Form sind die Blechtafeln 13 angeschweißt. Ansonsten ist der Druckbehälter gemäß derVariante nach Fig.4 genauso ausgebildet wie der Druckbehälter gemäß dem Ausführungsbeispiel nach den Figuren 2 und 3.

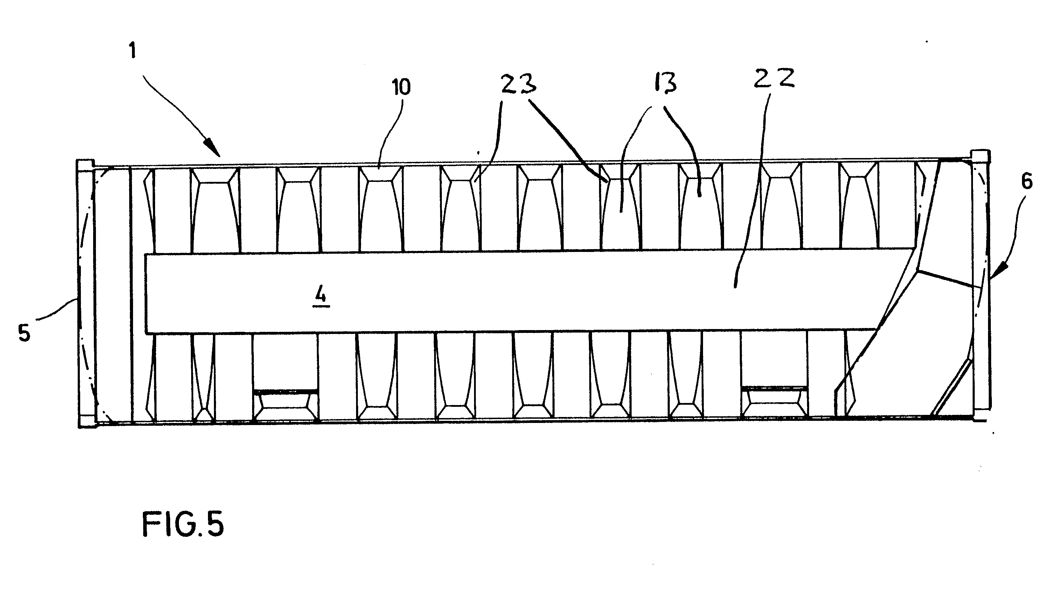

Die Ausführungsbeispiele der Figuren 5,6 und 7 entsprechen im wesentlichen denjenigen der Figuren 1 bis 4. Für gleiche Teile werden gleiche Bezugszeichen verwendet. Die vorstehenden Ausführungen gelten im wesentlichen auch für diese Ausführungsformen.

Der Druckbehälter 1 der Ausführungsformen gemäß den Figuren 5 bis 7 verfügt über ein abgewandeltes Traggerüst. Es enthält vornehmlich an beiden Seitenwänden und an der Deck- und der Bodenwand eine Vielzahl von biegesteifen Wandelementen, die im Abstand zueinander den Druckbehälter umgeben. Diese Wandelemente sind als Blechtafeln ausgebildet, die seitlich abgeknickte Stützwände 23 aufzeigen, mit Hilfe derer sie mit dem Druckbehälter z.B. durch Schweißen verbunden sind.

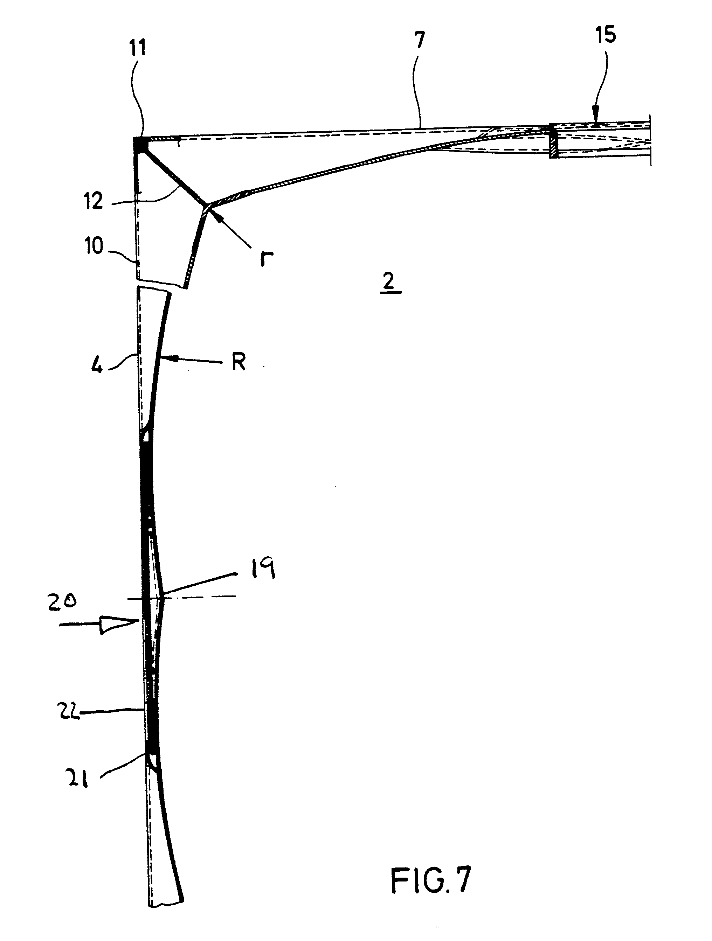

Die Druckbehälter 1 der Ausführungsformen 5 bis 7 enthalten in identischer Weise jeweils im Bereich der Wandmitte, also im Bereich des großen Krümmungsradius R einen Innenknick 19, der den Druckbehälter in mehrfacher Weise versteift. An der Außenseite des Innenknicks 19 wird derselbe durch Zugelemente 20 überspannt. Im vorliegenden Fall verwendet man hierfür U-Profile 21 sowie Blechtafeln 22. Wie die Figur 7 zeigt, sind die U-Profile so gestaltet, daß sie den durch den Innenknick freiwerdenden Raum zur Quaderaußenseite hin ausfüllen. Die Blechtafel 22 überspannt diese Konstruktion und deckt die U-Profile nach außen hin ab. Wie die Figur 5 zeigt,läuft die Blechtafel 22 fast über die gesamte Länge des Druckbehälters. Die U-Profile sind jeweils in Umfangsrichtung angeordnet.

Bei den Druckbehältern der Figuren 5 bis 7 ist das Traggerüst als Kombination zwischen biegesteifen Wandelementen und Zugankern ausgebildet. Beide ergänzen sich, wobei aber die biegesteifen Wandelemente auch für sich ausreichen würden, um den Druckbehälter auszusteifen und drucksicher zu machen.

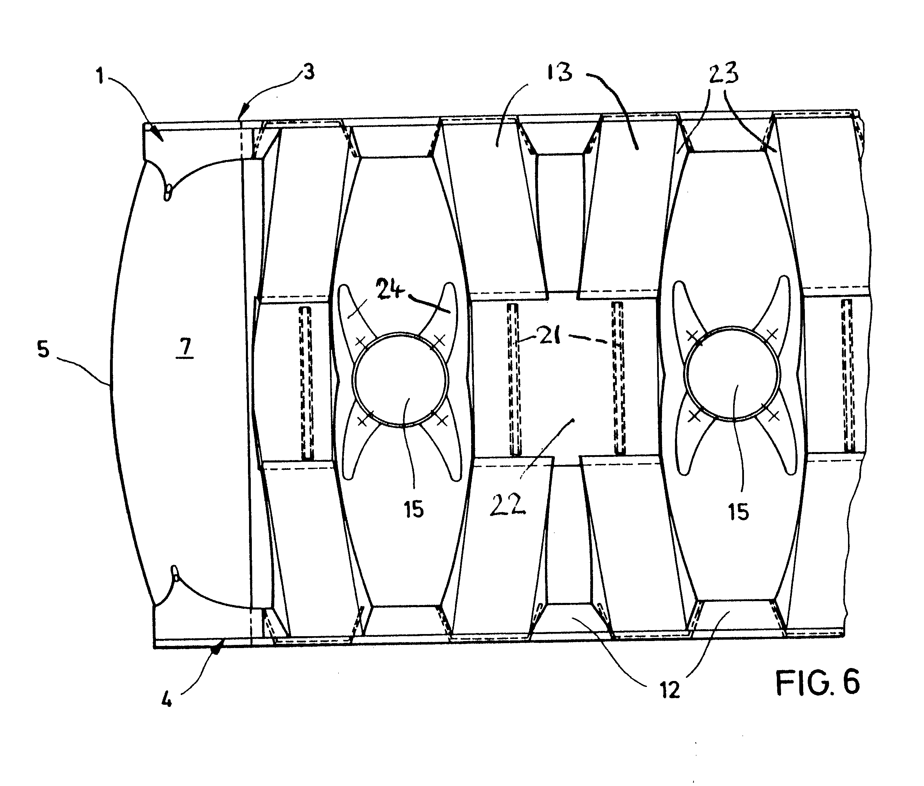

Um die vorhandene Quaderform optimal auszunutzen, ist es noch möglich, die Einfülldome abgesenkt in den Druckbehälter einzubauen. Dieser Sachverhalt geht gut aus den Figuren 6 und 7 hervor. Zu diesem Zweck ordnet man den Einfülldomen vier Vertiefungssicken 24 zu, in denen die Befestigungen für die Dome angeordnet sind. Diese Sicken versteifen den Druckbehälter im Bereich der Einfülldome und bieten die Möglichkeit gegenüber unversenkten Einfülldomen den Druckbehälter höher auszulegen und damit das Füllvolumen zu steigern.

Im folgenden wird die Funktionsweise des Druckbehälters näher erläutert.

Es ist auf Anhieb zu erkennen, daß der Innenraum des Druckbehälters 1, also das Ladevolumen, einen zur Verfügung stehenden quaderförmigen Transportraum wesentlich besser ausnutzt als ein kugelförmiger oder zylinderförmiger Druckbehälter. Die Druckbehälter lassen sich einfach stapeln, da sie von einem quaderförmigen Gerüst 10 umgeben sind, das den jeweils zur Verfügung stehenden Transportraum voll ausnutzt. Was die Druckfestigkeit des Druckbehälters anbelangt, so wirkt sich ein Innendruck wie folgt aus: die Wände 3,4,7 und 8 sind im Bereich des größeren Krümmungsradius R bestrebt sich in Richtung der Pfeile nach außen zu bewegen, wodurch die Eckbereiche 9 nach innen gezogen werden. Die hierdurch ausgeübten Kräfte und Spannungen werden von den biegsteifen Wandelementen 13 bzw. den Zugankern 12 auf das Traggerüst übertragen. Hierdurch ist es möglich, auch bei nahezu rechteckigen Behältern einen hohen Innendruck aufzubauen, ohne daß eine Verformung oder gar eine Zerstörung des Behälters zu befürchten wäre.

Es ist auch denkbar, anstelle von Blechtafeln für das Traggerüst profilierte Bleche, Blechprofile, Walz- oder Strangpreßprofile zu verwenden. Es ist ferner denkbar, daß der untere Flansch des als I-Profil ausgebildeten Zugankers anstelle einer konkaven C-Form auch eckig sein kann.

Der erfindungsgemäße Druckbehälter ist sowohl für Über-als auch für Unterdruck geeignet. Dies gilt nicht nur für den Transportzustand des Behälters, sondern auch für das Be- und Entladen.

Der Druckbehälter ist im Querschnitt nicht auf die Form eines Quadrats mit einem Höhen- zu Breitenverhältnis von 1 festgelegt. Die Erfindung eröffnet insbesondere die Möglichkeit, den Behälter mit einer größeren Höhe als Breite auszustatten.

## Ansprüche

1. Druckbehälter für Über- oder Unterdruck, mit Seitenwänden, Stirnwänden, einer Deckwand und einer Bodenwand, wobei alle Wände zum Behälterinnenraum im wesentlichen konkav gekrümmt ausgebildet sind,
**dadurch gekennzeichnet,**
daß die Seitenwände (3,4) die Deckwand (7) und die Bodenwand (8) an ihren die Wände (3,4,7,8) miteinander verbindenden Eckbereichen (9) einen kleineren Krümmungsradius (r) aufweisen als in ihrer jeweiligen Wandmitte (R) zwischen zwei benachbarten Eckbereichen (9), daß außen um die Wände (3,4,7,8) ein im wesentlichen quaderförmiges Traggerüst (10) angebracht ist, dessen Ecken (11) im wesentlichen auf den gleichen Querschnittsdiagonalen (D) liegen wie die Eckbereiche (9) der Wände (3,4,7,8), und daß biegesteife Wandelemente (13) als Verbindung zwischen Traggerüst (10) und Behälterwänden (3,4,7,8) vorhanden sind.

2. Druckbehälter nach Anspruch 1,
**dadurch gekennzeichnet,**
daß die Eckbereiche (9) der Wände (3,4,7,8) über Zuganker (12) mit der jeweils zugehörigen Ecke (11) des Traggerüsts (10) verbunden sind.

3. Druckbehälter nach Anspruch 1 oder 2,
**dadurch gekennzeichnet,** daß der größere Krümmungsradius (R) der Wandmitten mindestens etwa fünfzehnmal größer ist als der kleine Krümmungsradius (r) der Eckbereiche (9).

4. Druckbehälter nach einem der vorhergehenden Ansprüche,
**dadurch gekennzeichnet,**
daß die Wandelemente (13) als im wesentlichen ebene Blechtafeln (13) gebildet sind, die tangential auf den Außenseiten der Wände (3,4,7,8) des Druckbehälters (1) anliegen und an ihren Ecken (11) miteinander verbunden sind.

5. Druckbehälter nach einem der vorhergehenden Ansprüche,
**dadurch gekennzeichnet,**
daß die Wandelemente (13) wenigstens einer Wand aus Blechtafeln bestehen, die seitlich abgeknickt und mit dem Behälter verbunden sind.

6. Druckbehälter nach einem der vorhergehenden Ansprüche
**dadurch gekennzeichnet,**
daß das Traggerüst (10) eine Kombination aus einer Vielzahl von in Umfangrichtung wirkenden biegesteifen Wandelementen (13) und jeweils in den Eckbereichen (9) angeordneten Zugankern (12) ist, wobei sowohl die Wandelemente als auch die Zuganker in dem zwischen dem Druckbehälter und dem maximal zur Verfügung stehenden Quaderraum verbleibenden Freiraum angeordnet sind.

7. Druckbehälter nach einem der vorhergehenden Ansprüche,
**dadurch gekennzeichnet,**
daß zur Aufnahme des Drucks wenigstens eine Wand (3,4, 7,8) einen in Richtung der Längserstreckung verlaufenden, nach innen gerichteten Knick (19) aufweist.

8. Druckbehälter nach einem der vorhergehenden Ansprüche,

**dadurch gekennzeichnet,**

daß der Behälter außen Zug- und/oder Druckelemente (20) aufweist, die den Innenknick (19) überspannen.

9. Druckbehälter nach einem der vorhergehenden Ansprüche,

**dadurch gekennzeichnet,**

daß als Zug- und/oder Druckelement (20) ein Profil (21) und/oder eine Blechtafel (22) verwendet wird, die beidendig in Umfangsrichtung mit dem Druckbehälter verbunden ist.

10. Druckbehälter nach einem der Ansprüche 1 bis 9,

**dadurch gekennzeichnet,**

daß die Zuganker (12) als im Querschnitt im wesentlichen I-förmige, sich längs des Behälters (1) erstreckende Profile mit einem oberen und einem unteren Flansch (16,17) und einem beide Flansche miteinander verbindenden Verbindungssteg (18) ausgebildet sind, wobei die Verbindungsstege jeweils etwa auf einer Querschnittsdiagonalen (D) des Traggerüsts (10) liegen und der untere Flansch (17) mit jeweils zwei benachbarten Wänden des Behälters verbunden ist, während der obere Flansch (16) mit jeweils zwei benachbarten Blechtafeln (13) des Traggerüsts (10) verbunden ist.

11. Druckbehälter nach einem der Ansprüche 1 bis 10,

**dadurch gekennzeichnet,**

daß der untere Flansch (17) des I-Profils (12) eine zum Behälterinneren konkave C-Form aufweist und tangential im Bereich des größeren Krümmungsradius (R) an die Wände (3,4,7,8) des Behälters (1) anschließt, wobei die Eckbereiche (9) des Behälters (1) durch den C-förmigen Flansch (17) gebildet sind.

12. Druckbehälter nach einem der Ansprüche 1 bis 11,

**dadurch gekennzeichnet,**

daß die Seitenwände (3,4) die Deckwand (7) und die Bodenwand (8) des Behälters (1) einen geschlossenen Behältermantel bilden, wobei die Blechtafel (13) des Traggerüsts (10) an dessen Ecken (11) trapezförmig abgekantet sind, wobei die abgekanteten Teile der Blechtafeln die Zuganker (12) bilden.

13. Druckbehälter nach einem der Ansprüche 1 bis 12,

**dadurch gekennzeichnet,**

daß mindestens drei Seiten des Behälters von Wandelementen (13) aus profilierten Formteilen umgeben sind, wobei benachbarte Formteile an ihren verformten Enden (12) miteinander verbunden sind.

14. Druckbehälter nach einem der Ansprüche 1 bis 13,

**dadurch gekennzeichnet,**

daß die Deckwand (7) des Behälters (1) von Stützträgern (14) überspannt ist, die beidendig an den Ecken (11) der angrenzenden Formteile (13) des Traggerüsts (10) befestigt sind.

15. Druckbehälter nach einem der Ansprüche 1 bis 14,

**dadurch gekennzeichnet,**

daß die Formteile (13) mit den Außenseiten der Wände (3,4,7,8) des Behälters verbunden sind.

16. Druckbehälter nach einem der vorhergehenden Ansprüche,

**dadurch gekennzeichnet,**

daß wenigstens eine Behälterwand (3,4,7,8) zwei oder mehrere nach innen gerichtete, in Längserstreckung verlaufende Abknickungen (19) aufweist.

17. Druckbehälter nach einem der vorhergehenden Ansprüche,

**dadurch gekennzeichnet,**

daß wenigstens eine Wand (3,4,7,8) des Druckbehälters aus einem ein- oder mehrfach geknickten, konkaven Blech besteht.

18. Druckbehälter nach einem der vorhergehenden Ansprüche,

**dadurch gekennzeichnet,**

daß der Druckbehälter (1) in seiner Querschnittsform ein größeres oder kleineres Höhen/Breitenverhältnis als 1 haben kann.

FIG.1

EP 0 353 387 A2

FIG.2

EP 0 353 387 A2

FIG.3

FIG. 4

FIG.5

FIG. 6

EP 0 353 387 A2

FIG.7